# EUROPEAN PATENT SPECIFICATION

(11) **EP 3 090 864 B1**
(45) Date of publication and mention of the grant of the patent: **11.05.2022**
(21) Application number: 16169941.8
(22) Date of filing: 27.01.2014
(51) Int. Cl.: B29C 73/16, F04B 35/04, F04B 35/06, B60S 5/04, B29L 30/00

(54) **APPARATUS FOR PRODUCING A PRESSURE**
VORRICHTUNG ZUR ERZEUGUNG EINES DRUCKS
APPAREIL DE PRODUCTION DE PRESSION

(30) Priority: 25.01.2013 DE 102013100738; 15.03.2013 US 201313837857; 24.01.2014 DE 102014100815
(43) Date of publication of application: 09.11.2016
(62) Divisional of application: 14703245.2
(73) Proprietor: Illinois Tool Works, Inc., Glenview, Illinois 60025 (US)
(72) Inventor: SPINDLER, Martin Patrick, Glenview, IL Illinois 60025 (US); HUTTEN, Byron Peter, Glenview, IL Illinois 60025 (US); KLEMM, Henry Friedrich Ferdinand, Glenview, 60025 (US); PFEIFER, Volker, Glenview, IL Illinois 60025 (US)
(74) Representative: Trinks, Ole

(56) References cited:
- EP-A2- 1 605 162
- DE-A1-102008 057 827
- DE-U1-202012 101 110
- GB-A- 2 452 137
- US-A- 2 629 539
- US-A1- 2004 115 073

## Description

The invention relates to an apparatus for producing a pressure, in particular a compressor for pumping up an object, in particular a vehicle tire and, if appropriate, for dispensing a sealant liquid into said vehicle tire according to the first part of claim 1.

### Prior art

Apparatuses for dispensing a tire sealant are known and can be obtained commercially in many different forms and embodiments. They are used primarily for introducing tire sealant into defective tires in the event of punctures and for sealing a defective tire. In this case, compressed air is forced by means of a compressor into a container containing tire sealant, and the tire sealant is then pumped into the defective tire via a valve by means of appropriate riser tubes. The valve can then be switched over, allowing the tire then to be pumped up by means of the compressor. Standard functions in the prior art are such that either only air is pumped, in order to pump up balls or air mattresses, or to carry out air pressure monitoring. In the repair function, the prior art is designed in such a way that the introduction of sealant and the air takes place in a single operation.

Apparatuses of this kind are known from GB 2 452 137 A, that discloses an apparatus according to the preamble of claim 1, DE 20 2005 017 071 U1 or DE 20 2009 002 661 U1, for example.

### Object

It is the object of the present invention to make an apparatus of this kind more compact and to facilitate the assembly and handling thereof.

This object is achieved by the features of the second part of claim 1.

The pressure source is preferably designed as a compressed air source, i.e. as a compressor. This compressor consists of three parts, namely a motor with a fan impeller, a transmission component and a pressure buildup element.

According to the invention, however, all the elements of this pressure source are arranged in a linear manner, i.e. the movement of an output shaft of the motor is transferred in a linear manner to the pressure buildup element. No angular offsetting of an element occurs. The pressure source as a whole is thereby kept very shallow, leading in turn to a reduction in the installation space. A compressor of this kind can, of course, likewise be used in a large number of other tire sealant sets.

To ensure that a linear transmission is formed, there is a bevel gear between the motor and the pressure buildup element, into the teeth of which gear a bevel pinion engages. This bevel pinion is mounted on the output shaft of the motor, wherein the abovementioned fan impeller is situated opposite the bevel pinion on the output shaft.

The bevel gear, in turn, is connected eccentrically to a connecting rod of the pressure buildup element, wherein the connecting rod drives a piston in the pressure buildup element in a known manner to produce a pressure. This connecting rod is arranged axially parallel with the output shaft of the motor. The linear configuration of the pressure source as a whole is thereby formed.

Another feature of the invention is to be regarded as the provision of a transmission pod. This transmission pod connects the motor and the pressure buildup element to one another and contains the bevel gear, the bevel pinion and the connecting rod. It is open toward the pressure buildup element and has lateral grooves, allowing the pressure buildup element to be connected to the transmission pod in a simple manner by inserting an end plate provided on the pressure buildup element into the groove. The pressure buildup element is thereby fixed relative to the transmission, thus ensuring that the pressure buildup element is not pushed out or pulled in relative to the transmission during the operation of the connecting rod.

The motor reaches into the transmission pod with the output shaft from the other side, wherein the bevel pinion is mounted on the output shaft within the transmission pod.

This transmission pod can be a separate part but is preferably molded onto the holding shell within the interior of the latter during the production of the holding shell itself.

For the operation of such an apparatus according to the invention, for the operation of the compressed air source/of the compressor, it is generally necessary to provide an electrical connection having a plug connector for connecting for example to a cigarette lighter, and a valve connection for connecting to a defective tire. According to the present invention, it is the intention for at least one of the two connections to be arranged in the surface of the housing so as to be clearly visible and easy for a user to handle. In this case, it is also provided that the corresponding connecting lines, that is to say on the one hand a cable between the plug connector and compressor and on the other hand the hose between the valve connection and container, are laid in corresponding ducts or channels that are formed into the housing.

To make the plug connector and valve connection easier to handle, it should additionally be provided that these are designed to be elastically variable in length, such that they are held in a clamped manner in the recesses after being inserted. Removal is also facilitated in this way.

### Description of the figures

Further advantages, features and details of the invention will become apparent from the following description of preferred illustrative embodiments and from the drawing, in which
**Figure 1** shows a perspective view of an apparatus according to the invention for dispensing tire sealant;
**Figure 2** shows a plan view of the opened apparatus in accordance with figure 1;
**Figure 3** shows a perspective view of the opened apparatus in accordance with figure 2 during the insertion of a container;
**Figure 4** shows a perspective view of a holding shell as part of a housing of the apparatus in accordance with figure 1;
**Figure 5** shows a perspective view of one part of a cover;
**Figure 6** shows a perspective view of another part of a cover as part of the housing of the apparatus in accordance with figure 1;
**Figure 7** shows a perspective view of a pressure source according to the invention;
**Figure 8** shows a partial view of the apparatus in accordance with figure 1 shortly before the joining of the container valve and the connection piece to the pressure source;
**Figure 9** shows a partial view of the apparatus in accordance with figure 1 in the joined state of the container valve and the pressure source;
**Figure 10** shows a plan view of a further exemplary embodiment of an apparatus for dispensing tire sealant.

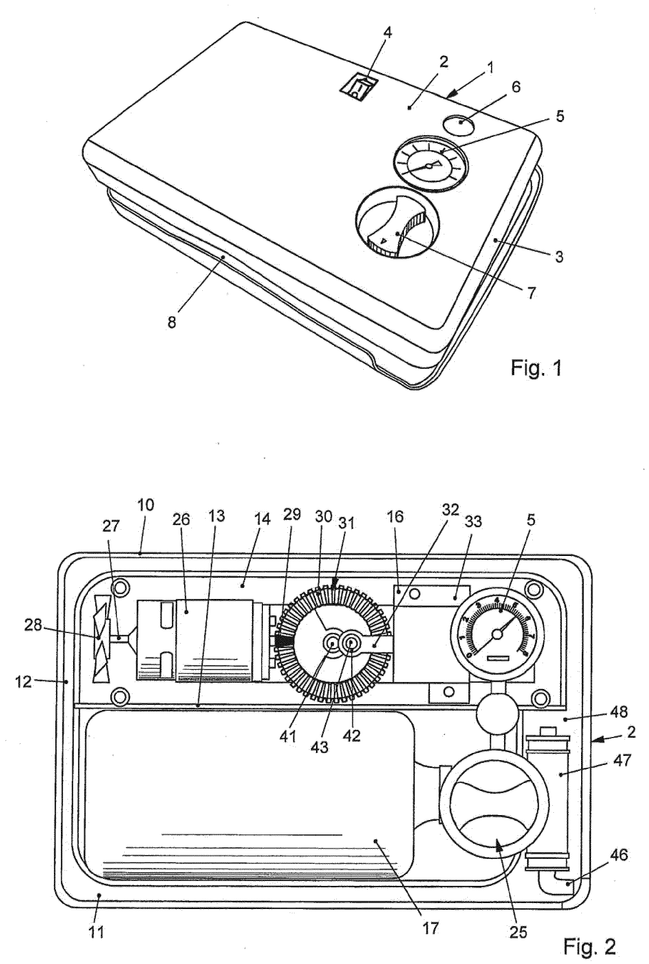

According to figure 1, an apparatus according to the invention for dispensing tire sealants has a housing 1. This consists essentially of a holding shell 2 and a cover 3. Functional elements are provided in corresponding openings in the holding shell 2. These are, on the one hand, a button 4 for switching the apparatus on and off, a manometer 5 for measuring the pressure built up by a pressure source (described below), a pressure release button 6 for releasing an excess pressure and a rotary knob 7 for actuating a valve (described below).

Provided between the holding shell 2 and the cover 3 is an encircling slot 8, into which a cable for operating the apparatus and, if appropriate, also a hose for dispensing a tire sealant can be inserted. A similar configuration is described in DE 20 2009 002 661.

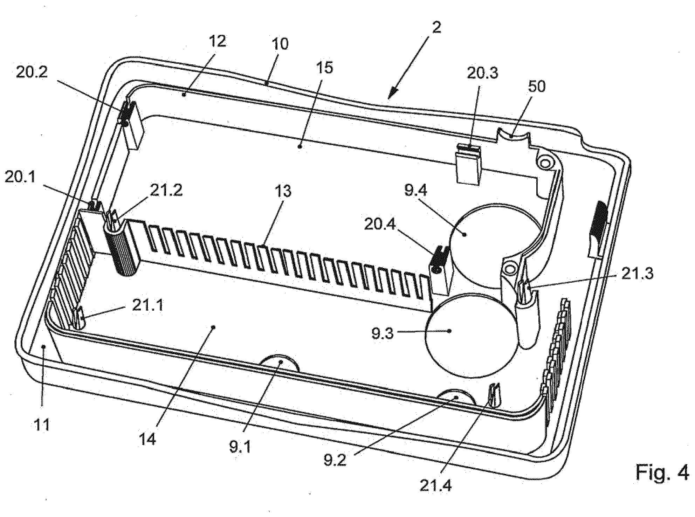

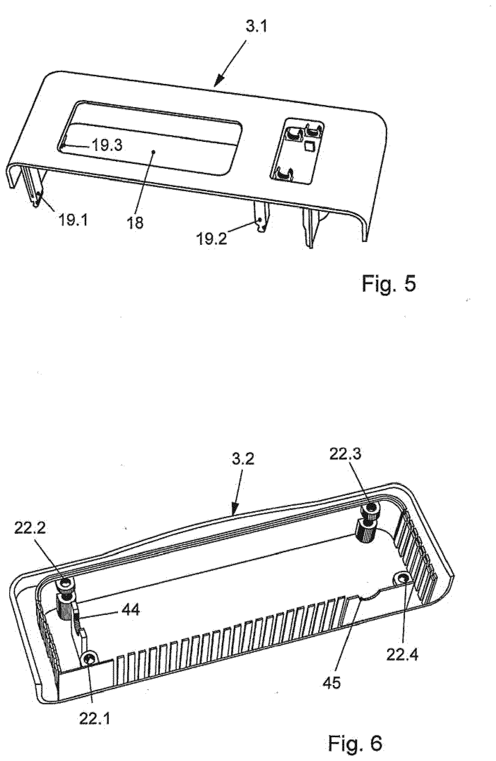

Apart from the corresponding openings 9.1 to 9.4 for button 4, manometer 5, pressure release button 6 and rotary knob 7, the holding shell 2 has, according to figure 4, an approximately encircling outer wall 10 of partially undulating design which at least partially encircles an inner wall 12, forming a trough 11. Two spaces 14 and 15 are formed by a partition wall 13 within the space surrounded by the inner wall 12, said spaces serving to accommodate a compressed air source (shown in figure 1) or a tire sealant container 17. The holding shell 2 is then assigned the cover 3, which, according to figure 5, serves of a covering part 3.1 for the container and, according to figure 6, of a covering part 3.2 for the compressed air source 16. Here, covering part 3.1 has a large opening 18, through which it is possible to see the inserted container 17. In particular, it is possible in doing so to recognize corresponding technical data, including, of course, the expiry date.

Moreover, clip feet 19.1 to 19.3 project inward from the cover 3.1 in the interior, interacting with corresponding clip receptacles 20.1 to 20.4 in the holding shell 2 (see figure 4). The clip feet 19 and clip receptacles 20 are designed with a flexibility such that the cover 3.1 can be removed and placed on again. This serves especially for the exchange of the container 17.

To fix the covering part 3.2 in accordance with figure 6, undercut tongues 21.1 to 21.4 project from corresponding pillars in space 14, interacting in the position of use with lugs 22.1 to 22.4 formed on covering part 3.2. If these undercut tongues 21.1 to 21.4 are inserted into the lugs 22.2 to 22.4, they then engage behind the lugs and do not allow opening without being destroyed. Of course, however, they can also be designed with a flexibility such that they allow reopening and, in this case, it is sufficient, for example, if the undercut is designed as a bevel.

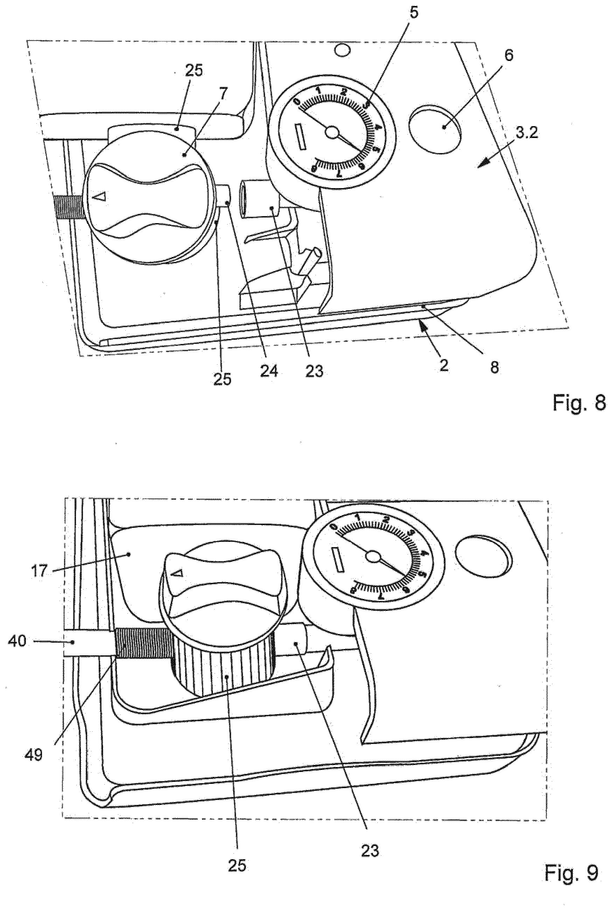

According to the invention, the container 17 and the compressed air source 16 are connected releasably to one another. For this purpose, a connection piece 23 projects from the compressed air source 16 in accordance with figures 8 and 9, into which connection piece a nipple 24 with a sealing ring 25 can be inserted. However, it is also possible here for a plurality of sealing rings to be inserted. This nipple 24 belongs to a rotary valve 25, which can be actuated by the rotary knob 7. A rotary valve of this kind is described in DE 101 06 468, for example, which is incorporated here expressly by reference.

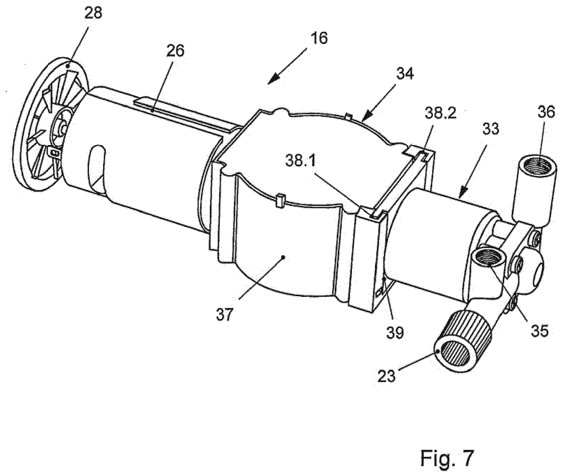

In the present case, the compressed air source 16 is preferably designed as a compressor. According to figures 1 and 7, it has a motor 26, the output shaft 27 of which drives a fan impeller 28 at one end. At the other end, a bevel pinion 29 is mounted on the output shaft 27, engaging in teeth 30 of a bevel gear 31. Connected eccentrically to said bevel gear 31 is a connecting rod 32, which drives a piston (not shown specifically) in a pressure buildup element 33.

An illustrative embodiment of a compressed air source according to the invention in the assembled state is shown in figure 7. The motor 26 with the fan impeller 28, a transmission 34, in which, in particular, the bevel gear 31 rotates, being acted upon, on the one hand, by the bevel pinion 29 and, on the other hand, by the connecting rod 32, and the pressure buildup element 33, to which the connection piece 23 is connected, are visible. Connection 35 to the manometer and connection 36 to the pressure release button 6 are furthermore indicated.

A significant feature in the present invention is that a transmission pod 37 is provided for assembly. This can be produced separately or, alternatively, can be an integral part of the holding shell 2. It largely surrounds the transmission 34 but is open at the front toward the pressure buildup element 33 and there has two mutually facing vertical grooves 38.1 and 38.2, into which an end plate 39 is inserted, which is part of the pressure buildup element 33. The assembly, in accordance with the invention, of the apparatus for dispensing tire sealant is accomplished as follows:
The rotary valve 25 is mounted on the container 17 for tire sealant in advance, and it may also be the case that a hose 40 (shown in figure 9) for dispensing the tire sealant or for transferring air into a vehicle tire, for example, is connected thereto.

The compressed air source 16 is likewise assembled in advance, although, if the transmission pod 37 is an integral part of the holding shell 2, this can also be carried out only during installation of the compressed air source 16 in the holding shell. Here, the bevel gear 31 is inserted first into the transmission pod 37. This bevel gear 31 rotates about a spindle 41, which projects upward from a base of the transmission pod 37. After this, the output shaft 27 is inserted into the transmission part 34 from the closed side of the transmission pod, with the result that it projects into the interior of the transmission pod 37. The bevel pinion 29 is then mounted on this part of the output shaft 27 in such a way that it engages in the teeth 30 of the bevel gear 31. The motor 26 together with the fan impeller 28 is thus fixed on the transmission pod 37. The pressure buildup element 33 is inserted with its end plate 39 into the two vertical grooves 38.1 and 38.2, wherein the connecting rod 32 is pushed onto an eccentric pin 43 rotating eccentrically around the spindle 41 by means of a connecting rod eye 42. The compressed air source 16 is thus ready for operation and can be inserted into the holding shell 2. The space 14 which has received the compressed air source 16 is then covered by covering part 3.2, wherein a forked strip 44 engages behind the compressed air source 16 between the motor 26 and the fan impeller 28. This ensures that the compressed air source 16 does not move backward and forward within space 14. This purpose is also served by the abovementioned recess accommodating the connection piece 23 in the partition wall 13. The counterpart to this recess is indicated by the reference number 45 in the covering part 3.2 in figure 6.

By means of the above-described interplay between the undercut tongues 21.1 to 21.4 and the lugs 22.1 to 22.4, the space 14 containing the compressed air source 16 is closed and preferably can only be opened by force.

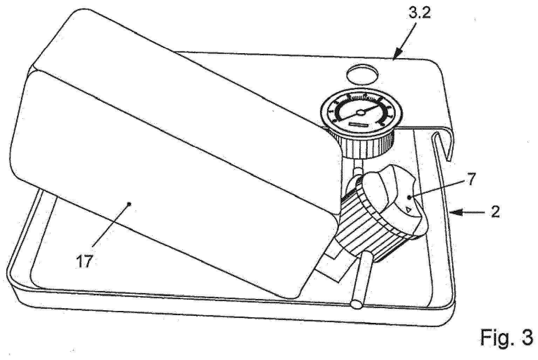

The container 17 together with the rotary valve 25 is then inserted into the space 15 of the holding shell 2. For this purpose, the container 17 must admittedly first be tilted, as shown in figure 3, since otherwise it cannot get past either the outer wall 10 or the inner wall 12. In this tilted state, the nipple 24 is then inserted into the connection piece 23, and the container 17 is pivoted into its rest position, shown in figure 2. In this rest position, the container 17 is accommodated in space 15. For operation of the compressed air source, connection to a power source, e.g. a cigarette lighter, is necessary. A cable 46 for this purpose is preferably laid in the trough 11, while an electric connection 47 is accommodated in a space 48 above the rotary valve30.

Space 15 can then also be closed by covering part 3.1, in which the clip feet 19.1 to 19.3 are inserted into the clip receptacles 20.1 to 20.4. If electric connection of the apparatus is desired, or exchange of the container 17, it is sufficient to open said covering part 3.1 and to remove the electric connection 47 or to remove the container 17 in a manner opposite to that described above and replace it with a new container.

Consideration is also given to laying the hose 40 in the trough 11, wherein a wire helix 49 shown in figure 9 in interaction with corresponding trough strips 50 (see figure 4) ensures that the hose 40 cannot be pulled off the rotary valve 25 accidentally. The corresponding counterpart to the trough 11 in covering part 3.1 is not shown.

If there is a requirement that the apparatus as a whole should remain closed, it is, of course, also possible to find space in the trough 11 to accommodate the electric connection 27. In this case, it is not necessary to open covering part 3.1.

The rotary valve has two or three preferred positions. In one position, the compressed air source 16 is closed, and, in a second position, the compressed air source is connected directly to the hose 40 by the connection piece 23 and the corresponding nipple 24, allowing compressed air to be introduced directly into a tire. In a third position, the compressed air source is connected to the interior of the container 17, allowing tire sealant to be introduced through a bypass into the hose 40 and, from the latter, into the tire.

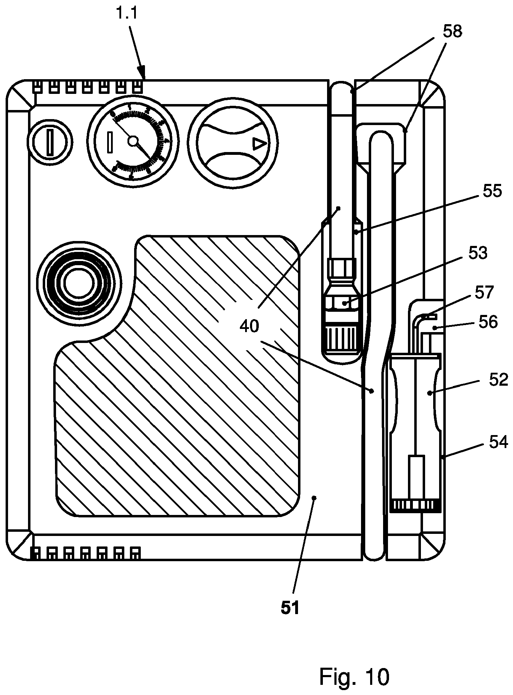

Figure 10 shows a further exemplary embodiment of a housing 1.1 of an apparatus for dispensing tire sealant. In the case of said housing 1.1, recesses are formed into the surface 51 thereof, which recesses serve for the fixing of a plug connector 52 and/or of a valve connection 53 for connecting to a tire. Both the plug connector 52 and the valve connection 53 may be designed to be elastically variable in length such that they are held clamped in the corresponding recess 54 and 55 of the surface 51. The recess 54 is adjoined by a duct 56 for a cable 57 that connects the plug connector 52 to the compressed air source 16/the compressor. In this way, said compressed air source/compressor is supplied with the electrical current required for its operation.

The recess 55 is adjoined by a channel 58 into which the hose 40 is laid, wherein the hose 40 connects the valve connection 53 to the container 17. In the exemplary embodiment shown, the channel 58 runs once around the entire housing 1.1.

By means of this arrangement, it is ensured that a user can, without further auxiliary aids, identify what connections he must make in order to operate the apparatus, and therefore the operation of the apparatus as a whole is greatly simplified.

**List of reference signs**

| | | | |
|---|---|---|---|
| 1 | housing | 33 | pressure buildup element |
| 2 | housing shell | 34 | transmission |
| 3 | cover | 35 | connection |
| 4 | button | 36 | connection |
| 5 | manometer | 37 | transmission pod |
| 6 | pressure release button | 38 | groove |
| 7 | rotary knob | 39 | end plate |
| 8 | slot | 40 | hose |
| 9 | openings | 41 | spindle |
| 10 | outer wall | 42 | connecting rod eye |
| 11 | trough | 43 | eccentric pin |
| 12 | inner wall | 44 | forked strip |
| 13 | partition wall | 45 | counterpart |
| 14 | space | 46 | cable |
| 15 | space | 47 | connection |
| 16 | compressed air source | 48 | space |
| 17 | container | 49 | wire helix |
| 18 | opening | 50 | trough strip |
| 19 | clip feet | 51 | surface |
| 20 | clip receptacle | 52 | plug connector |
| 21 | tongue | 53 | valve connection |
| 22 | lugs | 54 | recess |
| 23 | connection piece | 55 | recess |
| 24 | nipple | 56 | duct |
| 25 | rotary valve | 57 | cable |
| 26 | motor | 58 | channel |
| 27 | output shaft | | |
| 28 | fan impeller | | |
| 29 | bevel pinion | | |
| 30 | teeth | | |
| 31 | bevel gear | | |
| 32 | connecting rod | | |

## Claims

1. An apparatus for producing a pressure, in particular a compressor for pumping up an object, in particular a vehicle tire and, if appropriate, for dispensing a sealant liquid into said vehicle tire, having a pressure buildup element (33), which is connected to a motor (26) by a transmission (34),
**characterized in that** the transmission (34) connects the motor (26) to the pressure buildup element (33) in a linear manner,
wherein the transmission (34) is enclosed by a transmission pod (37), and the transmission pod (37) is open toward the pressure buildup element (33) and has two lateral grooves (38.1, 38.2), into which an end wall (39) of the pressure buildup element (33) can be inserted.

2. The apparatus as claimed in claim 1,
**characterized in that**
the transmission (34) has a bevel gear (31), into which there engages a bevel pinion (29), which is mounted on a shaft (27) of the motor (26).

3. The apparatus as claimed in claim 2,
**characterized in that**
the bevel gear (31) is connected eccentrically to a connecting rod (32) of the pressure buildup element (33).

4. The apparatus as claimed in claim 3,
**characterized in that**
the connecting rod (32) drives a piston in the pressure buildup element (33).

5. The apparatus as claimed in at least one of claims 1 to 4,
**characterized in that**
a fan impeller (28) is associated with the motor (26).

6. The apparatus as claimed in at least one of claims 1 to 5,
**characterized in that**
transmission pod (37) is part of the housing (1), in particular part of the holding shell (2).

7. The apparatus as claimed in at least one of the preceding claims,
**characterized in that**
at least one recess (54, 55) for receiving a plug connector (52) and/or a valve connection (53) is formed into the housing (1.1).

8. The apparatus as claimed in claim 7,
**characterized in that**
the plug connector (52) and/or valve connection (53) are/is designed to be elastically variable in length.

9. The apparatus as claimed in claim 7 or 8,
**characterized in that**
the recess (54, 55) is adjoined by a duct (56) and/or a channel (58) which are/is formed into the housing, one of which serves for receiving a cable (57) and the other of which serves for receiving a hose (40).

10. The apparatus as claimed in at least one of claims 7 to 9,
**characterized in that**
the recess (54, 55) is formed into a surface (51) of the housing (1.1).

## Patentansprüche

1. Vorrichtung zur Erzeugung eines Drucks, insbesondere ein Kompressor zum Aufpumpen eines Gegenstands, insbesondere eines Fahrzeugreifens und gegebenenfalls zum Abgeben einer Dichtflüssigkeit in den Fahrzeugreifen, mit einem Druckaufbauelement (33), das über ein Getriebe (34) mit einem Motor (26) verbunden ist,
**dadurch gekennzeichnet, dass**
das Getriebe (34) den Motor (26) mit dem Druckaufbauelement (33) auf lineare Weise verbindet,
wobei das Getriebe (34) von einer Getriebekapsel (37) umschlossen ist und die Getriebekapsel (37) zum Druckaufbauelement (33) hin offen ist und zwei seitliche Nuten (38.1, 38.2) aufweist, in die eine Endwand (39) des Druckaufbauelements (33) eingeführt werden kann.

2. Vorrichtung nach Anspruch 1,
**dadurch gekennzeichnet, dass**
das Getriebe (34) ein Kegelrad (31) hat, in das ein Kegelritzel (29) eingreift, das auf einer Welle (27) des Motors (26) gelagert ist.

3. Vorrichtung nach Anspruch 2,
**dadurch gekennzeichnet, dass**
das Kegelrad (31) exzentrisch mit einer Pleuelstange (32) des Druckaufbauelementes (33) verbunden ist.

4. Vorrichtung nach Anspruch 3,
**dadurch gekennzeichnet, dass**
die Pleuelstange (32) einen Kolben im Druckaufbauelement (33) antreibt.

5. Vorrichtung nach zumindest einem der Ansprüche 1 bis 4,
**dadurch gekennzeichnet, dass**
ein Lüfterrad (28) dem Motor (26) zugeordnet ist.

6. Vorrichtung nach zumindest einem der Ansprüche 1 bis 5,
**dadurch gekennzeichnet, dass**
die Getriebekapsel (37) Teil des Gehäuses (1), insbesondere Teil der Halteschale (2), ist.

7. Vorrichtung nach zumindest einem der vorhergehenden Ansprüche,
**dadurch gekennzeichnet, dass**
zumindest eine Ausnehmung (54, 55) zur Aufnahme eines Steckverbinders (52) und/oder eines Ventilanschlusses (53) in dem Gehäuse (1.1) ausgebildet ist.

8. Vorrichtung nach Anspruch 7,
**dadurch gekennzeichnet, dass**
der Steckverbinder (52) und/oder der Ventilanschluss (53) elastisch längenveränderlich ausgebildet ist/sind.

9. Vorrichtung nach Anspruch 7 oder 8,
**dadurch gekennzeichnet, dass**
sich an die Ausnehmung (54, 55) ein Kanal (56) und/oder eine Röhre (58) anschließt, der bzw. die in dem Gehäuse ausgebildet ist/sind, von denen der eine zur Aufnahme eines Kabels (57) und der andere zur Aufnahme eines Schlauches (40) dient.

10. Vorrichtung nach zumindest einem der Ansprüche 7 bis 9,
**dadurch gekennzeichnet, dass**
die Ausnehmung (54, 55) in einer Oberfläche (51) des Gehäuses (1.1) ausgebildet ist.

## Revendications

1. Appareil pour la production d'une pression, en particulier un compresseur pour le gonflage d'un objet, en particulier un pneu de véhicule et, en cas de besoin, pour la distribution d'un liquide d'étanchéité dans ledit pneu de véhicule, ayant un élément de montée en pression (33) qui est relié à un moteur (26) par une transmission (34),
**caractérisé en ce que**
la transmission (34) relie le moteur (26) à l'élément de montée en pression (33) d'une manière linéaire,
dans lequel la transmission (34) est enfermée dans un module de transmission (37), et le module de transmission (37) est ouvert vers l'élément de montée en pression (33) et a deux rainures latérales (38.1, 38.2), dans lesquelles une paroi d'extrémité (39) de l'élément de montée en pression (33) peut être insérée.

2. Appareil selon la revendication 1,
**caractérisé en ce que**
la transmission (34) a un engrenage conique (31), dans lequel s'engage un pignon conique (29), qui est monté sur un arbre (27) du moteur (26).

3. Appareil selon la revendication 2,
**caractérisé en ce que**
l'engrenage conique (31) est relié de manière excentrique à une bielle (32) de l'élément de montée en pression (33) .

4. Appareil selon la revendication 3,
**caractérisé en ce que**
la bielle (32) entraîne un piston dans l'élément de montée en pression (33).

5. Appareil selon l'une quelconque des revendications 1 à 4,
**caractérisé en ce que**
une turbine de ventilateur (28) est associée au moteur (26) .

6. Appareil selon l'une quelconque des revendications 1 à 5,
**caractérisé en ce que**
le module de transmission (37) fait partie du logement (1), en particulier de la coque de retenue (2).

7. Appareil selon l'une quelconque des revendications précédentes,
**caractérisé en ce que**
au moins un évidement (54, 55) pour la réception d'un connecteur à fiche (52) et/ou un raccord de soupape (53) est formé dans le logement (1.1).

8. Appareil selon la revendication 7,
**caractérisé en ce que**
le connecteur à fiche (52) et/ou le raccord de soupape (53) est/sont conçus pour être élastiquement variable(s) en longueur.

9. Appareil selon la revendication 7 ou 8,
**caractérisé en ce que**
l'évidement (54, 55) est contigu à un conduit (56) et/ou un canal (58) qui est/sont formé(s) dans le logement, dont l'un sert à la réception d'un câble (57) et l'autre sert à la réception d'un tuyau (40).

10. Appareil selon l'une quelconque des revendications 7 à 9,
**caractérisé en ce que**
l'évidement (54, 55) est formé dans une surface (51) du logement (1.1).
